# EUROPEAN PATENT SPECIFICATION

(11) **EP 2 301 233 B1**
(45) Date of publication and mention of the grant of the patent: **25.04.2012**
(21) Application number: 08774445.4
(22) Date of filing: 27.06.2008
(51) Int. Cl.: H04M 3/48, H04L 29/06

(54) **METHOD, APPARATUSES AND COMPUTER STORAGE FOR CCBS SCREENING FOR BLACKLISTED IMS NETWORKS**
VERFAHREN, VORRICHTUNGEN UND COMPUTERSPEICHERUNG FÜR CCBS-SCREENING NACH IMS-NETZWERKEN AUF SCHWARZEN LISTEN
PROCÉDÉ, APPAREILS ET STOCKAGE D'ORDINATEURS POUR FILTRAGE CCBS POUR RÉSEAUX IMS INTERDITS

(43) Date of publication of application: 30.03.2011
(73) Proprietor: Alcatel Lucent, 75007 Paris (FR)
(72) Inventor: KARTHICK, Rajapandiyan, Chennai 600099 (IN); MUTHUSAMY, Muthiah, Chennai 600099 (IN)
(74) Representative: Sciaux, Edmond
(86) International application number: PCT/EP2008/058281
(87) International publication number: WO 2009/155988

(56) References cited:
- WO-A-03/013118
- US-A1- 2007 217 394
- US-A1- 2008 084 975
- "DTS TISPAN-01002-NGN V0.1.7 (2005-03" 3GPP DRAFT; 05BTD128R3 DTS_TISPAN_01002_REQUIREMENTS_FOR_PSTN_ISD N_SI MULATION_SERVICES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG SA, no. Tokyo, Japan; 20050314, 4 March 2005 (2005-03-04), pages 1-52, XP050204421

## Description

### BACKGROUND

### Technical Field

The embodiments disclosed herein generally relate to a telecommunications networks, and, more particularly, to an IP Multimedia Subsystem (IMS) networks.

### Description of the Related Art

There are many methods to reduce telecommunication traffic and maximize the utilization of network resources. One such method is to allow booking of Completion of Call to Busy Subscriber (CCBS) Service for only selected operators. The Completion of Call to Busy Subscriber (CCBS) Service allows a user who attempts to call a busy subscriber to have the network monitor the busy called party.

The Completion of Call to Busy Subscriber (CCBS) Service allows a user who attempts to call a busy subscriber to have the network monitor the busy called party. The CCBS supplementary service gives the possibility to generate automatic repeated efforts to call a presently busy subscriber. The cycle would be as follows: party X calls party Y when party Y is busy. Party X has subscribed to the Completion of Call to Busy Subscriber service and the network notifies him that the service can be invoked. The Party X invokes the CCBS supplementary service. The network tries to reach party Y for a certain period of time. When party Y is no more busy, party X will be notified (for example, through a ring) and as soon as party X goes off-hook party Y will be alerted. The Party X has the possibility to cancel the CCBS service.

Any Calling party (CG) from any IMS network who has subscribed to CCBS feature can book CCBS when the called party's (CD) IMS network transmits the Allow-Events: CCBS indication in 486 Busy Here message. After CCBS booking by the CG party, the CD party network has to do monitor access mechanism for the CD party. The Monitor access mechanism involves continuously sending interface messages to the CD party terminal to check whether the CD party has gone on-hook. This process involves substantially usage of CD party network resource. The document US 2008/084975 A1 describes a module to perform call screening for a blacklisted IMS caller, comprising means adapted to store a list of not-blacklisted callers and compare the list of non-blacklisted networks for the blacklisted callers and screen the call.

However, at times it becomes necessary not to allow booking of CCBS for blacklisted networks. No provision is available for a CD party network to stop CCBS booking for blacklisted networks/other operator.

### SUMMARY

In view of the foregoing, an embodiment herein provides a method of Completion of Calls to Busy Subscriber (CCBS) screening for a blacklisted IMS network, the method comprising steps of a calling party making a call to a called party, where the calling party and the called party belong to different IMS networks; IMS network of the called party storing value of p_charging_vector;orig-ioi, which is obtained from the INVITE message sent by the calling party; the called party transmitting a 486 Busy Here message with Allow-Events:ccbs to Serving Call Session Control Function (S-CSCF) of IMS network of the called party, which comprises a list of non-blacklisted IMS networks, comprising the fields of domain operators identification and ccbs allow Boolean, which is modifiable by a GUI/or by any means, when the called party is busy; the S-CSCF checking the list with that of originating operator id received in the p_charging_vector;orig-ioi of Invite Message ; the header Allow-Events:ccbs in 486 Busy Here message is sent to the calling party, on the S-CSCF finding a match in the list; and the header Allow-Events:ccbs in 486 Busy Here message being screened out, on the S-CSCF not finding a match in the list.

Embodiments disclosed herein also provide a module to perform Completion of Calls to Busy Subscriber (CCBS) screening for an IP multimedia subsystem (IMS) network to screen calls from a blacklisted IMS network, the module comprising of a list of non-blacklisted IMS networks, which can be modified by a GUI; a comparison module to check the list of non-blacklisted networks for blacklisted IMS networks; and a means to screen out the Allow-Events:ccbs indication from a 486 busy here message.

These and other aspects of the embodiments disclosed herein will be better appreciated and understood when considered in conjunction with the following description and the accompanying drawings. It should be understood, however, that the following descriptions, while indicating preferred embodiments and numerous specific details thereof, are given by way of illustration and not of limitation. Many changes and modifications may be made within the scope of the embodiments disclosed herein, and the embodiments disclosed herein include all such modifications.

### BRIEF DESCRIPTION OF THE DRAWINGS

The embodiments disclosed herein will be better understood from the following detailed description with reference to the drawings, in which:

FIG. 1 illustrates a system view displaying the communication between a calling party and a called party using the CCBS subscription feature in accordance with the embodiments disclosed herein;

FIG. 2 is an exploded view of FIG. 1 illustrating the communication between the terminating S-CSCF module present in the IMS network B in accordance with the embodiments disclosed herein;

FIG. 3 is a flow diagram illustrating a preferred method of CCBS screening for blacklisted networks in IMS network in accordance with the embodiments disclosed herein;

FIG. 4 is a flow diagram determining if the header Allow-Events:ccbs in message is enabled to the calling party IMS network A in accordance with the embodiments disclosed herein;

FIG 5. illustrates a process displaying the CCBS screening of blacklisted networks by displaying a one way procedure of communication from the calling party to the called party in accordance with the embodiments disclosed herein; and

FIG. 6 illustrates a process displaying the CCBS screening of blacklisted networks by displaying the one way procedure of communication from the called party to the calling party in accordance with the embodiments disclosed herein.

### DETAILED DESCRIPTION OF PREFERRED EMBODIMENTS

The embodiments disclosed herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments disclosed herein. The examples used herein are intended merely to facilitate an understanding of ways in which the embodiments disclosed herein may be practiced and to further enable those of skill in the art to practice the embodiments disclosed herein. Accordingly, the examples should not be construed as limiting the scope of the embodiments disclosed herein.

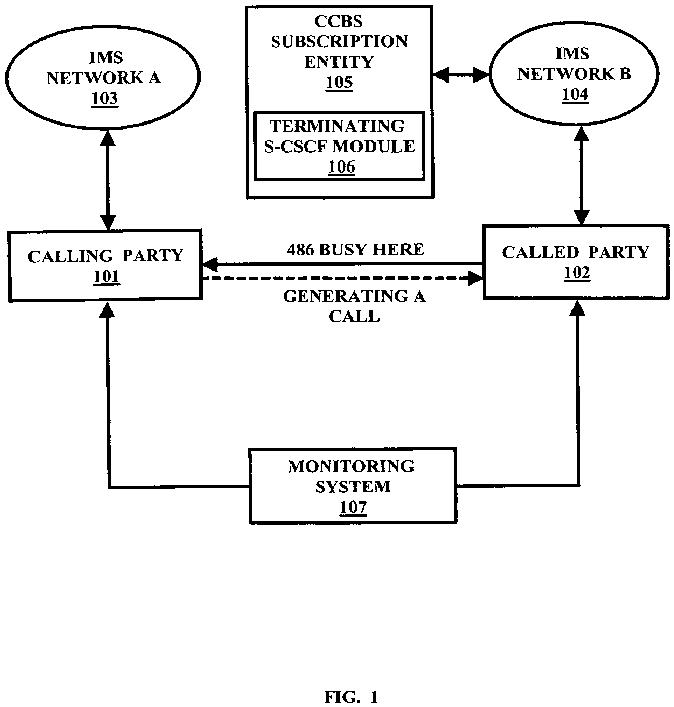

The embodiments disclosed herein achieve a completion of call to busy subscriber (CCBS) service screening for blacklisted networks in IMS network by screening the CCBS booking possible header/flag (Allow-Events:ccbs) in SIP protocol message (486 busy here) sent by called party network 104 to the calling party's network 103. Referring now to the drawings, and more particularly to FIGS. 1 through 6, where similar reference characters denote corresponding features consistently throughout the figures, there are shown preferred embodiments.

FIG. 1 illustrates a system view displaying the communication between a calling party and a called party using the CCBS subscription feature in accordance with the embodiments disclosed herein. FIG. 1 comprises of a called party 101, a called party 102, an IMS network A 103, an IMS network B 104, a CCBS subscription entity 105, a terminating S-CSCF module 106, and a monitoring system 107 according to one embodiment. FIG. 1 displays the communication between the two entities and/or parties i.e. calling party 101 and the called party 102 using CCBS subscribed feature in an IP multimedia subsystems network (IMS). The calling party 101 generates a call from IMS network A 103 and/or blacklisted network A to the called party 102 IMS network B 104. The calling party 101 can book the CCBS feature when the called party 102 IMS network B 104 transmits a "486 busy here" message with header Allow-Events:ccbs to the calling party 101. After the booking by the calling party 101 the called party 102 IMS network B 104 implements the monitor access mechanism by the monitor system 107 for the called party 102. The monitor system 107 sends interface messages continuously to the called party terminal to check if the called party 102 has gone on hook. The terminating S-CSCF module 106 screens the blacklisted networks in the IMS network B 104. The S-CSCF module 106 comprises of a list of non-blacklisted networks. For example a table comprising of CCBS_NON_BLACKLISTED_OPERATOR with domain Operator id of the network and ccbs_allow boolean is stored and is maintained in S-CSCF 106. If the calling party 101 network is a blacklisted network then the header Allow-Events:ccbs in 486 Busy Here message is screened out by the terminating S-CSCF module 106 and a caller from a blacklisted network does not able to book CCBS since Caller did not receive the header Allow-Events:ccbs in 486 Busy Here message.

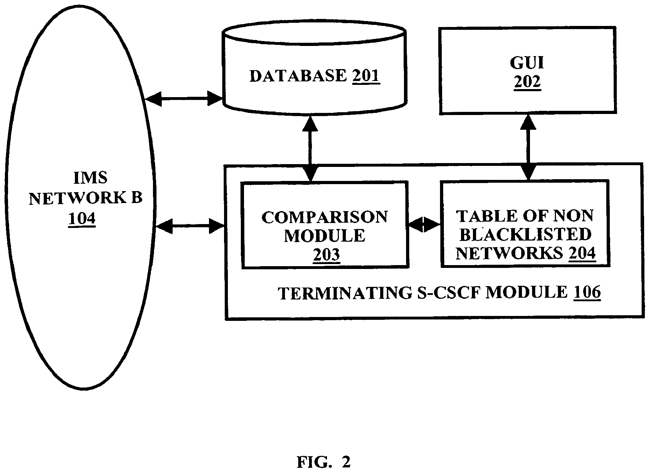

FIG. 2 illustrates the communication between the terminating S-CSCF module and the IMS network B in accordance with the embodiments disclosed herein. FIG. 2 illustrates the IMS network B 104, the terminating S-CSCF module 106, a database 201, a GUI 202, a comparison module 203, and a list of non-blacklisted networks module 204. FIG. 2 illustrates the screening mechanism of the blacklisted networks performed by the terminating S-CSCF module 106 in the IMS network B 104 of the called party 102. Once the call is generated by the IMS network A and/or blacklisted network A 103 of the calling party 101 to the IMS network B 104 of the called party 102 the terminating S-CSCF module 106 screens out the blacklisted networks using the comparison module 203. If the incoming call does not originate from a blacklisted network then the IMS network B 104 of the called party 102 sends the "486 busy here" message to the calling party 101. The terminating S-CSCF module 106 maintains the list of non-blacklisted networks. For example a table like CCBS_NON_BLACKLISTED_OPERATOR with domains Operator id and ccbs_allow boolean is stored and is maintained newly in S-CSCF. The list is modified by the GUI module 202 after the two IMS networks enter into a revenue agreement with reference to CCBS. During the call set up an INVITE message is transmitted from the calling party 101 to the called party 102 comprising of a stored value (e.g. a p_charging_vector:orig-ioi) which identifies the calling party IMS network 103 to the called party IMS network 104. The p_charging_vector:orig-ioi value is stored in a database 201 at the called party IMS network 104. The terminating S-CSCF module106, comprises of the comparison module 203, which compares the p_charging_vector:orig-ioi with the network data stored in the list of non-blacklisted networks 204. For example the list comprises of CCBS_NON_BLACKLISTED_OPERATOR-column of operator id for other IMS network (XYZ). This value XYZ will be compared with the p_charging_vector:orig-ioi received from the calling party network 103. The comparison module 203 compares both the values and concludes whether the network is a blacklisted network or not. If a match is found in the list are matching then the "486 busy here" message is sent to the calling party 102 IMS network A and/or calling party 102 blacklisted IMS network A and thus providing the end to end communication between the two parties. If no match is found in the list, then Allow-Events:ccbs indication is screened out. The calling party 102 cannot book CCBS, as the calling party 102 will not hear the announcement to book CCBS, as the Allow-Events:ccbs indication has been screened out. The list of structures disclosed herein is not exhaustive and that one skilled in the art understands that equivalent structures can be substituted for the recited structure without departing from the scope of the invention.

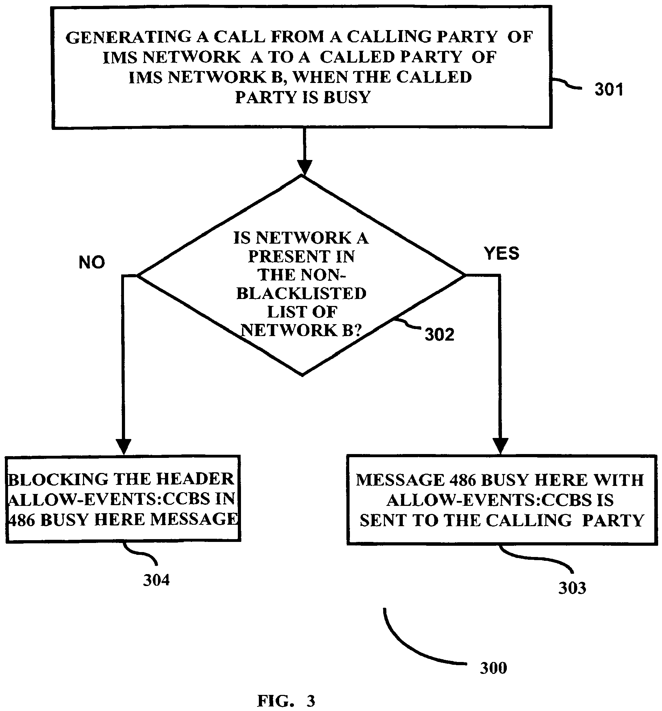

FIG. 3 is a flow diagram illustrating a preferred method of CCBS screening for blacklisted networks in an IMS network in accordance with the embodiments disclosed herein. FIG. 3 illustrates the process of screening out the blacklisted networks when a call is generated between two parties in any IMS network. Firstly a call is generated (301) from a calling party IMS network A 103 to the called party IMS network B 104. The called party IMS network B 104 checks (302) if the network A 103 exists in the list of non-blacklisted networks present in the S-CSCF of the IMS network B 104. If the calling party network A 103 is present in the list, the busy message along with Allow-Events:ccbs header 303 is transmitted to the calling party IMS network A 103. If the called party network A 103 is not present in the list, header Allow-Events:ccbs the busy message is blocked (304) from reaching the calling party 101. The various actions in method 300 may be performed in the order presented, in a different order, or simultaneously. Further, in some embodiments, some actions listed in Figure 3 may be omitted.

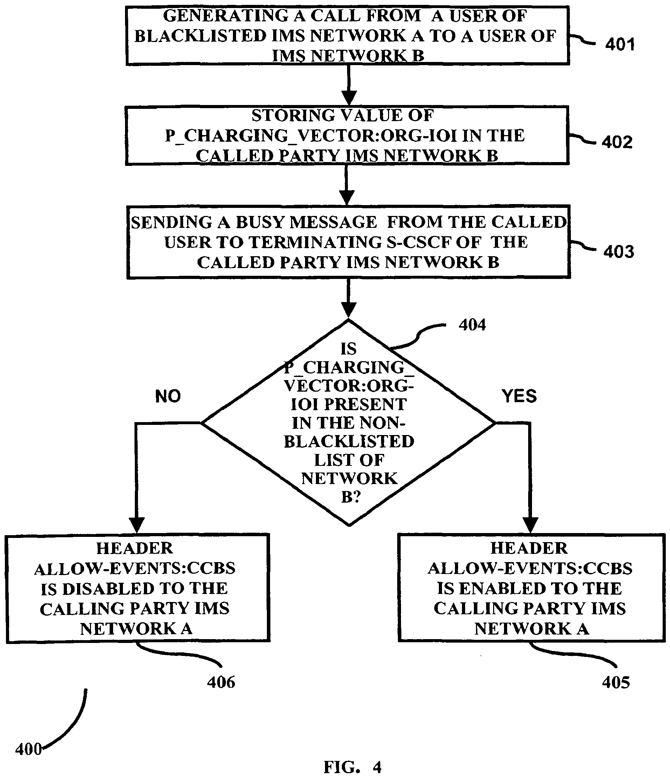

FIG. 4 illustrates a flow diagram illustrating the CCBS screening of blacklisted networks by displaying a one way procedure of communication from the calling party to the called party in accordance with the embodiments disclosed herein. A call is generated (401) by a user of a blacklisted IMS network A 103 to a user of IMS network B 104. A value of p_charging_vector:org-ioi, which is sent with the invite for the call by calling party network A 103 is stored (402) in a database 201 in the called party IMS network B 104. The p_charging_vector:org-ioi identifies the network A 102 to the network B 103. If the called party 102 is busy, a "486 busy here" message is sent (403) from the called party 102 to the terminating S-CSCF module 106 of the called party IMS network B 104. The comparison module 203 checks (404) if p_charging_vector:org-ioi is present in the list of non-blacklisted networks 204. If p_charging_vector:org-ioi is present in the list of non-blacklisted networks, then the Allow-Events:ccbs in 486 busy here message is not screened in (405) and the 486 Busy Here message with Allow-Events:cccbs is sent to the calling party 101 of the IMS network A 103. If the p_charging_vector:org-ioi is not present in the list of non-blacklisted networks, then the Allow-Events:ccbs in 486 busy here message in the called party network B is screened out (406). The calling party 101 will not be able to book CCBS, even though the calling party 101 has subscribed to CCBS, as he is not able to hear the announcement to book CCBS, as the Allow-Events:ccbs in 486 Busy Here message has been screened out. The various actions in method 400 may be performed in the order presented, in a different order, or simultaneously. Further, in some embodiments, some actions listed in Figure 4 may be omitted.

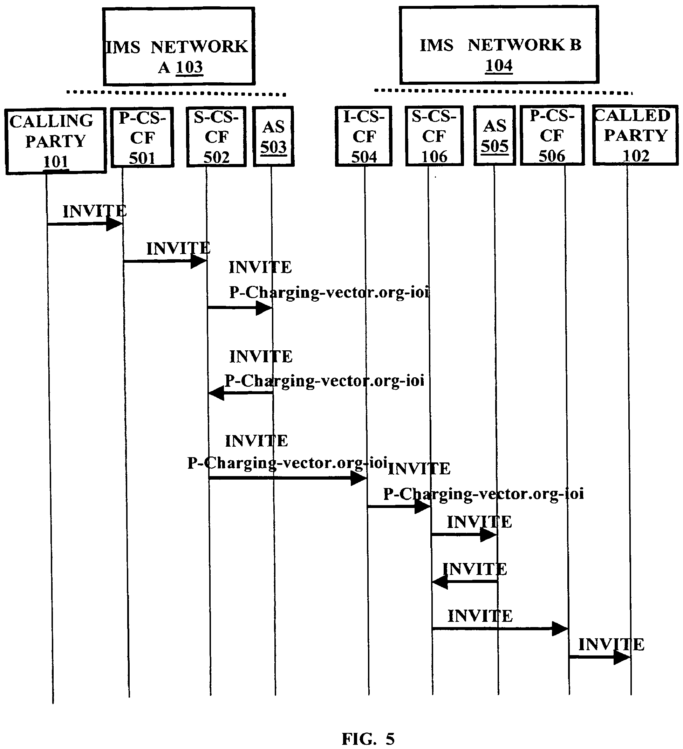

FIG. 5 illustrates a flow showing the CCBS screening of blacklisted networks by displaying a one way procedure of communication from the calling party to the called party in accordance with the embodiments disclosed herein. FIG. 5 comprises of the IMS network A 103, the IMS network B 104, the calling party 101, a P-CSCF (proxy call session control function) 501, a S-CSCF (serving call session control function) 502, a AS (application server) 503, a I-CSCF (interrogating call session control function) 504, a S-CSCF 106, an AS 505, a P-CSCF 506, and the called party 102. The calling party from IMS network 103 generates a call towards the called party IMS network B 104. The generated call is in the form of an INVITE as shown in FIG. 5. The INVITE passes first from the calling entity 101 to the proxy CSCF 501 then the S-CSCF 502 adds the user network data (e.g. p_charging_vector:org-ioi) to the INVITE. The INVITE then passes through the I-CSCF 504, S-CSCF 106 and then to the AS 505 of the IMS network B 104. The S-CSCF 106 stores the p_charging_vector:org-ioi in the database 201.

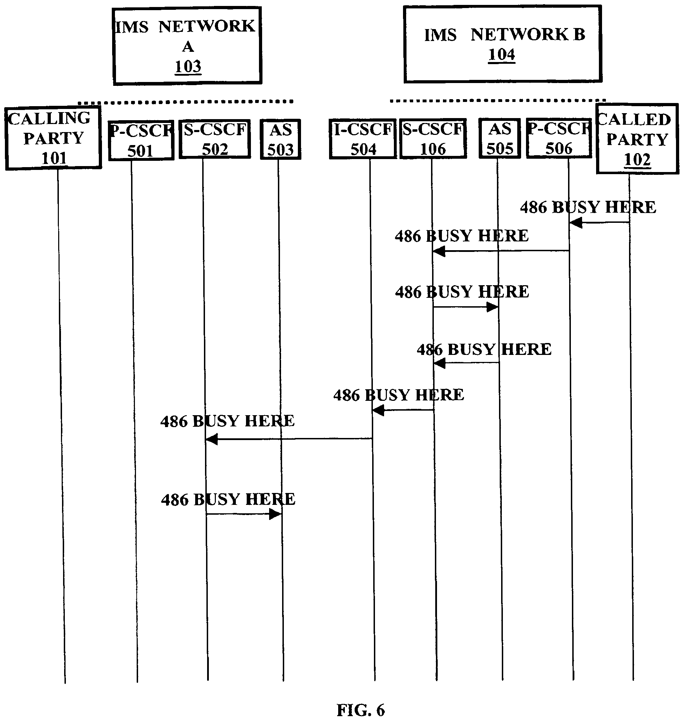

FIG. 6 illustrates a flow displaying the CCBS screening of blacklisted networks by displaying the one way procedure of communication from the called party to the calling party in accordance with the embodiments disclosed herein. FIG. 6 comprises of the IMS network A 103, the IMS network B 104, the calling party 101, a P-CSCF (proxy call session control function) 501, a S-CSCF (serving call session control function) 502, a AS (application server) 503, a I-CSCF (interrogating call session control function) 504, a S-CSCF 106, an AS 505, a P-CSCF 506, and the called party 102. If the called party 102 is busy, a 486 busy here message is sent to the S-CSCF module 106 through the P-CSCF 506. The S-CSCF 106 compares the identity from the received INVITE (p_charging_vector;org-ioi) with the list of non-blacklisted networks 204. If the identity from the received INVITE (p_charging_vector;org:ioi) matches with a entry in the list of non-blacklisted networks 204, then S-CSCF 106 does not screen the Allow-Events:ccbs indication in 486 busy here message, sent to the calling party 102. If the identity from the received INVITE (p_charging_vector;org:ioi) does not match with any entry in the list of non-blacklisted networks, then S-CSCF 106 screens out the Allow-Events:ccbs indication in 486 Busy Here message. The message "486 busy here" is transmitted from the called party 102 to the proxy CSCF 506, then to the S-CSCF 106. The message is passed back to the AS 505 then back to the S-CSCF 106. The message from the S-CSCF 106 is further passed to the interrogating CSCF 504. The "486 busy here" message is passed to the IMS network 103. If the user from the calling party 101 is a blacklisted network then the application server will not connect to media server for CCBS booking since Allow-Events:ccbs is screened in the called party IMS network B.

When a call is generated from the calling party IMS network A 101 to the called party IMS network 102, the terminating S-CSCF module 106 receives the p_charging_vector_org-ioi and compares with data stored in the list of non-blacklisted IMS networks. The list can be modified by the GUI 202, after an IMS network enters into a revenue agreement with the called party IMS network B 104. After the comparison is performed if the user network matches with the list of non blacklisted networks 204 then the 486 busy here message with Allow-Events:ccbs is transmitted to the calling party IMS network A 103.

The embodiments herein disclose a method of CCBS screening using fields of p_charging_vector_org-ioi, Allow-Events:ccbs and tables of non-blacklisted IMS networks, where the table comprises fields like domains operators identification and ccbs_allow Boolean. The fields specified in the embodiments are not exhaustive. The method may be practiced by a person skilled in the art using other fields within the scope of the invention.

The list of structures corresponding to the claimed means is not exhaustive and that one skilled in the art understands that equivalent structures can be substituted for the recited structure without departing from the scope of the invention.

The embodiments disclosed herein can take the form of an entirely hardware embodiment, an entirely software embodiment or an embodiment including both hardware and software elements. The embodiments that are implemented in software include but are not limited to, firmware, resident software, microcode, etc.

Furthermore, the embodiments disclosed herein can take the form of a computer program product accessible from a computer-usable or computer-readable medium providing program code for use by or in connection with a computer or any instruction execution system. For the purposes of this description, a computer-usable or computer readable medium can be any apparatus that can comprise, store, communicate, propagate, or transport the program for use by or in connection with the instruction execution system, apparatus, or device.

The medium can be an electronic, magnetic, optical, electromagnetic, infrared, or semiconductor system (or apparatus or device) or a propagation medium. Examples of a computer-readable medium include a semiconductor or solid state memory, magnetic tape, a removable computer diskette, a random access memory (RAM), a read-only memory (ROM), a rigid magnetic disk and an optical disk. Current examples of optical disks include compact disk - read only memory (CD-ROM), compact disk - read/write (CD-R/W) and DVD.

A data processing system suitable for storing and/or executing program code will include at least one processor coupled directly or indirectly to memory elements through a system bus. The memory elements can include local memory employed during actual execution of the program code, bulk storage, and cache memories which provide temporary storage of at least some program code in order to reduce the number of times code must be retrieved from bulk storage during execution.

Input/output (I/O) devices (including but not limited to keyboards, displays, pointing devices, etc.) can be coupled to the system either directly or through intervening I/O controllers. Network adapters may also be coupled to the system to enable the data processing system to become coupled to other data processing systems or remote printers or storage devices through intervening private or public networks. Modems, cable modem and Ethernet cards are just a few of the currently available types of network adapters.

The foregoing description of the specific embodiments will so fully reveal the general nature of the embodiments disclosed herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments disclosed herein have been described in terms of preferred embodiments, those skilled in the art will recognize that the embodiments disclosed herein can be practiced with modification within the scope of the appended claims.

## Claims

1. An IP Multimedia Subsystem IMS (103) network, said network adapted to perform Completion of Calls to Busy Subscriber CCBS screening for a blacklisted IMS network, **characterized in that** said network comprises means (106) adapted to
create an editable list (204) of non-blacklisted IMS networks;
check (302) said list of non-blacklisted networks for said blacklisted IMS network; and
screen a CCBS indication from a busy message.

2. The Multimedia Subsystem IMS (103) network, as claimed in claim 1, wherein said list (204) of non-blacklisted IMS networks are adapted to be modified by a Graphical User Interface GUI.

3. The Multimedia Subsystem IMS (103) network, as claimed in claim 1, wherein said CCBS indication is Allow-Events:ccbs, said indication being present in said busy message.

4. A method of Completion of Calls to Busy Subscriber CCBS screening for an IP multimedia subsystem IMS (103) network to screen calls from a blacklisted IMS network, wherein a calling party from a first IMS network to a called party belonging to a second IMS network, **characterized in that** said method comprises steps of:
said second IMS network receiving (403) a busy message from said called party, when said called party is busy;
said second IMS network checking (404) for said first IMS network in a list of non-blacklisted IMS networks;
said second IMS network sending said busy message to said first IMS network, on said second IMS network finding said first IMS network in said list; and
said second IMS network blocking (406) said busy message from reaching said first IMS network, on said second IMS network not finding said first IMS network in said list.

5. A method, as claimed in claim 4, wherein said method comprises steps of:
said second IMS network storing value of p_charging_vector;orig-ioi, wherein said p_charging_vector;orig-ioi is obtained from INVITE message sent by said calling party network;
said called party transmitting a 486 Busy Here message with header Allow-Events:ccbs to Serving Call Session Control Function S-CSCF of said second IMS network, when said called party is busy, wherein said S-CSCF comprises a list of non-blacklisted IMS networks;
said S-CSCF checking said list for said p_charging_vector;orig-ioi;
said S-CSCF sending said 486 Busy Here message along with the header Allow-Events:ccbs to said calling party, on said S-CSCF finding a match in said list; and
said S-CSCF screening out said header Allow-Events:ccbs in 486 Busy Here message, on said S-CSCF not finding a match in said list.

6. A method, as claimed in claim 4, wherein said list of non-blacklisted IMS networks is modifiable using a Graphical User Interface GUI.

7. A method, as claimed in claim 4, wherein said list comprises of fields:
domain operators identification; and
ccbs_allow Boolean.

8. A program storage device readable by computer, tangibly embodying a program of instructions executable by said computer to perform a method of Completion of Calls to Busy Subscriber CCBS screening for an IP multimedia subsystem IMS (103) network to screen calls from a blacklisted IMS network, wherein a calling party from a first IMS network to a called party belonging to a second IMS network, **characterized in that** said method comprises steps of:
said called party transmitting a busy message (403) to said second IMS network, when said called party is busy;
said second IMS network checking (404) for said first IMS network in a list of non-blacklisted IMS networks;
said second IMS network sending said busy message to said first IMS network, on said second IMS network finding said first IMS network in said list; and
said second IMS network blocking (406) said busy message from reaching said first IMS network, on said second IMS network not finding said first IMS network in said list.

9. A program storage device readable by computer, as claimed in claim 8, wherein said program storage device performs a method of Completion of Calls to Busy Subscriber CCBS screening for an IP multimedia subsystem IMS (103) network to screen calls from a blacklisted IMS network, said method comprising steps of:
said second IMS network storing value of p_charging_vector;orig-ioi, wherein said p_charging_vector;orig-ioi is obtained from INVITE message sent by said calling party network;
said called party transmitting a 486 Busy Here message with header Allow-Events:ccbs to Serving Call Session Control Function S-CSC of said second IMS network, when said called party is busy, wherein said S-CSCF comprises a list of non-blacklisted IMS networks;
said S-CSCF checking said list for said p_charging_vector;orig-ioi;
said S-CSCF sending said 486 Busy Here message along with the header Allow-Events:ccbs to said calling party, on said S-CSCF finding a match in said list; and
said S-CSCF screening out said header Allow-Events:ccbs in 486 Busy Here message, on said S-CSCF not finding a match in said list.

10. A program storage device readable by computer, as claimed in claim 8, wherein said list of non-blacklisted IMS networks is modifiable using a Graphical User Interface GUI.

11. A program storage device readable by computer, as claimed in claim 8, wherein said list comprises of fields:
domain operators identification; and
ccbs_allow Boolean.

12. A module (106) to perform Completion of Calls to Busy Subscriber CCBS screening for a blacklisted IP multimedia subsystem IMS (103) network, **characterized in that** said module comprises means (203, 204) adapted to:
store a list of non-blacklisted IMS networks;
compare said list of non-blacklisted networks for said blacklisted IMS network; and
screen a CCBS indication from a busy message.

## Patentansprüche

1. IP-Multimedia-Subsystem- bzw. IMS-Netzwerk (103), wobei das besagte Netzwerk für das Durchführen einer "Rückruf bei besetzt" bzw. CCBS-Filterung in Bezug auf ein schwarzgelistetes IMS-Netzwerk eingerichtet ist, **dadurch gekennzeichnet, dass** das besagte Netzwerk Mittel (106) umfasst, die für das Durchführen der folgenden Schritte ausgelegt sind:
Erstellen einer editierbaren Liste (204) von nicht schwarzgelisteten IMS-Netzwerken;
Prüfen (302) der besagten Liste von nicht schwarzgelisteten Netzwerken auf das besagte schwarzgelistete IMS-Netzwerk; und
Filtern einer CCBS-Angabe aus einer Besetztmeldung.

2. Multimedia-Subsystem bzw. IMS-Netzwerk (103) nach Anspruch 1, wobei die besagte Liste (204) von nicht schwarzgelisteten IMS-Netzwerken anhand einer grafischen Benutzerschnittstelle GUI geändert werden kann.

3. Multimedia Subsystem bzw. IMS-Netzwerk (103) nach Anspruch, wobei die besagte CCBS-Angabe "Allow-Events:ccbs" ist, wobei die besagte Angabe in der besagten Besetztmeldung enthalten ist.

4. Verfahren zur Durchführung einer "Rückruf bei besetzt" bzw. CCBS-Filterung für ein IP-Multimedia-Subsystem- bzw. IMS-Netzwerk (103), um Anrufe von einem schwarzgelisteten IMS-Netzwerk zu filtern, wobei ein anrufender Teilnehmer eines ersten IMS-Netzwerks einen Teilnehmer, welcher einem zweiten IMS-Netzwerk angehört, anruft, **dadurch gekennzeichnet, dass** das besagte Verfahren die folgenden Schritte umfasst:
Das besagte zweite IMS-Netzwerk empfängt (403) eine Besetztmeldung von dem besagten angerufenen Teilnehmer, wenn der besagte angerufene Teilnehmer besetzt ist;
das besagte zweite IMS-Netzwerk prüft (404), ob das besagte erste Im-Netzwerk in einer Liste von nicht schwarzgelisteten IMS-Netzwerken verzeichnet ist;
das besagte zweite IMS-Netzwerk sendet die besagte Besetztmeldung an das besagte erste IMS-Netzwerk, nachdem das besagte zweite IMS-Netzwerk das besagte erste IMS-Netzwerk in der besagten Liste gefunden hat; und
das besagte zweite IMS-Netzwerk sperrt (406) die besagte Besetztmeldung, so dass diese das besagte erste IMS-Netzwerk nicht erreichen kann, nachdem das besagte zweite IMS-Netzwerk das besagte erste IMS-Netzwerk nicht in der besagten Liste gefunden hat.

5. Verfahren nach Anspruch 4, wobei das besagte Verfahren die folgenden Schritte umfasst:
Das besagte zweite IMS-Netzwerk speichert den Wert von p_charging_vector;orig-ioi, wobei das besagte p_charging_vector;orig-ioi aus einer von dem Netzwerk des besagten anrufenden Teilnehmers gesendeten INVITE-Nachricht erhalten wird;
der besagte angerufene Teilnehmer überträgt eine 486 "Busy Here"-Nachricht mit dem Header Allow-Events:ccbs an die bedienende Rufsitzungssteuerfunktion S-CSCF des besagten zweiten IMS-Netzwerks, wenn der besagte angerufene Teilnehmer besetzt ist, wobei die besagte S-CSCF eine Liste von nicht schwarzgelisteten IMS-Netzwerken umfasst;
die besagte S-CSCF prüft die besagte Liste auf den besagten p_charging_vector;orig-ioi;
die besagte S-CSCF sendet eine 486 "Busy Here"-Nachricht zusammen mit dem Header Allow-Events:ccbs an den besagten anrufenden Teilnehmer, nachdem die besagte S-CSCF einen Treffer in der besagten Liste gefunden hat; und
die besagte S-CSCF filtert den besagten Header Allow-Events:ccbs in der 486 "Busy Here"-Nachricht heraus, nachdem die besagte S-CSCF keinen Treffer in der besagten Liste gefunden hat.

6. Verfahren nach Anspruch 4, wobei die besagte Liste von nicht schwarzgelisteten IMS-Netzwerken unter Verwendung einer grafischen Benutzerschnittstelle GUI geändert werden kann.

7. Verfahren nach Anspruch 4, wobei die besagte Liste die folgenden Felder enthält:
Identifikation der Domain-Betreiber; und
ccbs_allow Boolean.

8. Computerlesbare Programmspeichervorrichtung, auf welcher ein Programm von durch den besagten Computer ausführbaren Instruktionen physisch gespeichert ist, um ein Verfahren zum Durchführen einer "Rückruf bei besetzt" bzw. CCBS-Filterung für ein IP-Multimedia-Subsystem bzw. IMS-Netzwerk (103) zur Filterung von Anrufen von einem schwarzgelisteten IMS-Netzwerk durchzuführen, wobei ein anrufender Teilnehmer eines ersten IMS-Netzwerks einen Teilnehmer, welcher einem zweiten IMS-Netzwerk angehört, anruft, **dadurch gekennzeichnet, dass** das besagte Verfahren die folgenden Schritte umfasst:
Der besagte angerufene Teilnehmer überträgt eine Besetztmeldung (403) an das besagte zweite IMS-Netzwerk, wenn der besagte angerufene Teilnehmer besetzt ist;
das besagte zweite IMS-Netzwerk prüft (404), ob das besagte erste IMS-Netzwerk in einer Liste von nicht schwarzgelisteten IMS-Netzwerken verzeichnet ist;
das besagte zweite IMS-Netzwerk sendet die besagte Besetztmeldung an das besagte erste IMS-Netzwerk, nachdem das besagte zweite IMS-Netzwerk das besagte erste IMS-Netzwerk in der besagten Liste gefunden hat; und
das besagte zweite IMS-Netzwerk sperrt (406) die besagte Besetztmeldung, so dass diese das besagte erste IMS-Netzwerk nicht erreichen kann, nachdem das besagte zweite IMS-Netzwerk das besagte erste IMS-Netzwerk nicht in der besagten Liste gefunden hat.

9. Computerlesbare Programmspeichervorrichtung nach Anspruch 8, wobei die besagte Programmspeichervorrichtung ein Verfahren zum Durchführen einer "Rückruf bei besetzt" bzw. CCBS-Filterung für ein IP-Multimedia-Subsystem bzw. IMS-Netzwerk (103) zur Filterung von Anrufen von einem schwarzgelisteten IMS-Netzwerk durchführt, wobei das Verfahren die folgenden Schritte umfasst:
Das besagte zweite IMS-Netzwerk speichert den Wert von p_charging_vector;orig-ioi, wobei das besagte p_charging_vector;orig-ioi aus einer von dem Netzwerk des besagten anrufenden Teilnehmers gesendeten INVITE-Nachricht erhalten wird;
der besagte angerufene Teilnehmer überträgt eine 486 "Busy Here"-Nachricht mit dem Header Allow-Events:ccbs an die bedienende Rufsitzungssteuerfunktion S-CSCF des besagten zweiten IMS-Netzwerks, wenn der besagte angerufene Teilnehmer besetzt ist, wobei die besagte S-CSCF eine Liste von nicht schwarzgelisteten IMS-Netzwerken umfasst;
die besagte S-CSCF prüft die besagte Liste auf den besagten p_charging_vector;orig-ioi;
die besagte S-CSCF sendet eine 486 "Busy Here"-Nachricht zusammen mit dem Header Allow-Events:ccbs an den besagten anrufenden Teilnehmer, nachdem die besagte S-CSCF einen Treffer in der besagten Liste gefunden hat; und
die besagte S-CSCF filtert den besagten Header Allow-Events:ccbs in der 486 "Busy Here"-Nachricht heraus, nachdem die besagte S-CSCF keinen Treffer in der besagten Liste gefunden hat.

10. Computerlesbare Programmspeichervorrichtung nach Anspruch 8, wobei die besagte Liste von nicht schwarzgelisteten IMS-Netzwerken unter Verwendung einer grafischen Benutzerschnittstelle GUI geändert werden kann.

11. Computerlesbare Programmspeichervorrichtung nach Anspruch 8, wobei die besagte Liste die folgenden Felder enthalt:
Identifikation der Domain-Betreiber; und
ccbs_allow Boolean.

12. Modul (106) zum Durchführen einer "Rückruf bei besetzt" bzw. CCBS-Filterung für ein schwarzgelisleles IP-Multimedia-Subsystem- bzw. IMS-Netzwerk (103), **dadurch gekennzeichnet, dass** das besagte Modul Mittel (203, 204) umfasst, welche für das Durchführen der folgenden Schritte ausgelegt sind:
Speichern einer Liste von nicht schwarzgelisteten IMS-Netzwerken;
Vergleichen der besagten Liste von nicht schwarzgelistet Netzwerken für das besagte schwarzgelistete IMS-Netzwerk; und
Filtern einer CCBS-Angabe aus einer Besetztmeldung.

## Revendications

1. Réseau de sous-système multimédia IP IMS (103), ledit réseau étant adapté pour effectuer un filtrage de rappel automatique sur occupation CCBS pour un réseau IMS mis en liste noire, **caractérisé en ce que** ledit réseau comprend des moyens (106) adaptés pour
créer une liste modifiable (204) de réseaux IMS non mis en liste noire ;
vérifier ledit réseau IMS mis en liste noire dans ladite liste de réseaux non mis en liste noire
filtrer une indication CCBS à partir d'un message Occupé.

2. Réseau de sous-système multimédia IMS (103), selon la revendication 1, dans lequel ladite liste (204) de réseaux IMS non mis en liste noire est adaptée pour être modifiée par une interface utilisateur graphique GUI.

3. Réseau de sous-système multimédia IMS (103), selon la revendication 1, dans lequel ladite indication CCBS est Allow-Events:ccbs, ladite indication étant présente dans ledit message Occupé.

4. Procédé de filtrage de rappel automatique sur occupation CCBS pour un réseau de sous-système multimédia IP IMS (103) pour filtrer des appels provenant d'un réseau IMS mis en liste noire, dans lequel une partie appelante d'un premier réseau IMS appelle une partie appelée appartenant à un deuxième réseau IMS, **caractérisé en ce que** ledit procédé comprend les étapes suivantes :
ledit deuxième réseau IMS reçoit (403) un message Occupé provenant de ladite partie appelée, lorsque ladite partie appelée est occupée ;
ledit deuxième réseau IMS vérifie (404) ledit premier réseau IMS dans une liste de réseaux IMS non mis en liste noire ;
ledit deuxième réseau IMS envoie ledit message Occupé audit premier réseau IMS, sur ledit deuxième réseau IMS trouvant ledit premier réseau IMS dans ladite liste ; et
ledit deuxième réseau IMS empêche (406) ledit message Occupé d'atteindre ledit premier réseau IMS, sur ledit deuxième réseau IMS ne trouvant pas ledit premier réseau IMS dans ladite liste.

5. Procédé, selon la revendication 4, dans lequel ledit procédé comprend les étapes suivantes :
ledit deuxième réseau IMS stocke une valeur p_charging_vector;orig-ioi, dans lequel ladite valeur p_charging_vector;orig-ioi est obtenue à partir du message INVITE envoyé par ledit réseau de la partie appelante ;
ladite partie appelée transmet un message 486 Busy Here avec l'en-tête Allow-Events:ccbs à la fonction de commande de session d'appel de desserte S-CSCF dudit deuxième réseau IMS, lorsque ladite partie appelée est occupée, dans lequel ladite S-CSCF comprend une liste de réseaux IMS non mis en liste noire ;
ladite S-CSCF vérifie ladite valeur p_charging_vector;orig-ioi dans ladite liste ;
ladite S-CSCF envoie ledit message 486 Busy Here avec l'en-tête Allow-Events:ccbs à ladite partie appelante, sur ladite S-CSCF trouvant une correspondance dans ladite liste : et
ladite S-CSCF élimine par filtrage ledit en-tête Allow-Events:ccbs dans le message 486 Busy Here, sur ladite S-CSCF ne trouvant pas une correspondance dans ladite liste.

6. Procédé, selon la revendication 4, dans lequel ladite liste de réseaux IMS non mis en liste noire est modifiable en utilisant une interface utilisateur graphique GUI.

7. Procédé, selon la revendication 4, dans lequel ladite liste comprend les champs :
identification des opérateurs de domaines ; et
ccbs_allow Boolean.

8. Dispositif de stockage de programme lisible par ordinateur, mettant concrètement en oeuvre un programme d'instructions exécutables par ledit ordinateur pour exécuter un procédé de filtrage de rappel automatique sur occupation CCBS pour un réseau de sous-système multimédia IP IMS (103) pour filtrer des appels provenant d'un réseau IMS mis en liste noire, dans lequel une partie appelante d'un premier réseau IMS appelle une partie appelée appartenant à un deuxième réseau IMS, **caractérisé en ce que** ledit procédé comprend les étapes suivantes :
ladite partie appelée transmet un message Occupé (403) audit deuxième réseau IMS, lorsque ladite partie appelée est occupée ;
ledit deuxième réseau IMS vérifie (404) ledit premier réseau IMS dans une liste de réseaux IMS non mis en liste noire ;
ledit deuxième réseau IMS envoie ledit message Occupé audit premier réseau IMS, sur ledit deuxième réseau IMS trouvant ledit premier réseau IMS dans ladite liste; et
ledit deuxième réseau IMS empêche (406) ledit message Occupé d'atteindre ledit premier réseau IMS, sur ledit deuxième réseau IMS ne trouvant pas ledit premier réseau IMS dans ladite liste.

9. Dispositif de stockage de programme lisible par ordinateur, selon la revendication 8, dans lequel ledit dispositif de stockage de programme exécute un procédé de filtrage de rappel automatique sur occupation CCBS pour un réseau de sous-système multimédia IP IMS (103) pour filtrer des appels provenant d'un réseau IMS mis en liste noire, ledit procédé comprenant les étapes suivantes :
ledit deuxième réseau IMS stocke une valeur p_charging_vector;orig-ioi, dans lequel ladite valeur p_charging_vector;orig-ioi est obtenue à partir du message INVITE envoyé par ledit réseau de la partie appelante ;
ladite partie appelée transmet un message 486 Busy Here avec l'en-tête Allow-Events:ccbs à la fonction de commande de session d'appel de desserte S-CSCF dudit deuxième réseau IMS, lorsque ladite partie appelée est occupée, dans lequel ladite S-CSCF comprend une liste de réseaux IMS non mis en liste noire ;
ladite S-CSCF vérifie ladite valeur p_charging_vector;orig-ioi dans ladite liste;
ladite S-CSCF envoie ledit message 486 Busy Here avec l'en-tête Allow-Events:ccbs à ladite partie appelante, sur ladite S-CSCF trouvant une correspondance dans ladite liste ; et
ladite S-CSCF élimine par filtrage ledit en-tête Allow-Events:ccbs dans le message 486 Busy Here, sur ladite S-CSCF ne trouvant pas une correspondance dans ladite liste.

10. Dispositif de stockage de programme lisible par ordinateur, selon la revendication 8, dans lequel ladite liste de réseaux IMS non mis en liste noire est modifiable en utilisant une interface utilisateur graphique GUI.

11. Dispositif de stockage de programme lisible par ordinateur, selon la revendication 8, dans lequel ladite liste comprend les champs :
identification des opérateurs de domaines ; et
ccbs_allow Boolean.

12. Module (106) pour effectuer un filtrage de rappel automatique sur occupation CCBS pour un réseau de sous-système multimédia IP IMS mis en liste noire, **caractérisé en ce que** ledit module comprend des moyens (203, 204) adaptés pour :
stocker une liste de réseaux IMS non mis en liste noire ;
comparer ladite liste de réseaux non mis en liste noire pour ledit réseau IMS mis en liste noire ; et
filtrer une indication CCBS à partir d'un message Occupé.
